(19) Europäisches Patentamt
European Patent Office
Office européen des brevets

(11) **EP 2 700 939 A2**

(12) **EUROPÄISCHE PATENTANMELDUNG**

(43) Veröffentlichungstag:
**26.02.2014 Patentblatt 2014/09**

(51) Int Cl.:
***G01N 29/28*** *(2006.01)*

(21) Anmeldenummer: 13176530.7

(22) Anmeldetag: **15.07.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.08.2012 AT 9082012**

(71) Anmelder:
• **Tschegg, Elmar**
**1130 Wien (AT)**
• **Tschegg, Stefanie**
**1130 Wien (AT)**

(72) Erfinder:
• **Tschegg, Elmar**
**1130 Wien (AT)**
• **Tschegg, Stefanie**
**1130 Wien (AT)**
• **Tschegg, Elmar**
**1130 Wien (AT)**
• **Tschegg, Stefanie**
**1130 Wien (AT)**

(74) Vertreter: **Patentanwälte**
**Barger, Piso & Partner**
**Mahlerstrasse 9**
**Postfach 96**
**1015 Wien (AT)**

(54) **Ultraschallprüfkörper zur Messung von Ermüdungs- und bruchmechanischen Werten von Materialverbunden aus verschiedenen Werkstoffen.**

(57) Prüfkörper zur Ermittlung von Materialkennwerten mittels Ultraschallbeanspruchung, welcher im Wesentlichen stabförmig ausgeführt und zumindest mit einem seiner beiden Enden an ein Ultraschallhorn ankoppelbar ist. Um Übergangsbereiche zwischen unterschiedlichen Materialien optimal belasten zu können, besteht der Prüfkörper aus zwei mittels einer Grenzschicht miteinander verbundenen Stababschnitten unterschiedlichen Materials, deren Längenverhältnis im Wesentlichen dem Verhältnis der Wellenlänge der Ultraschallausbreitung in den jeweiligen Materialien entspricht.

$$l_1 = \lambda_1/4 \qquad \text{bzw.} \quad (2n+1)\,\lambda_1/4 \qquad n=0,1,2,\ldots$$

$$l_2 = \lambda_2/4 \qquad \text{bzw.} \quad (2n+1)\,\lambda_2/4 \qquad n=0,1,2,\ldots$$

Fig. 1

EP 2 700 939 A2

**Beschreibung**

Die Erfindung bezieht sich auf Prüfkörper zur Ermittlung von mechanischen und bruchmechanischen Kennwerten mit der Ultraschall-Ermüdungstechnik. Es werden mit dieser longitudinale (axiale), oder Torsions-, oder zusammengesetzte mechanische Wellen erzeugt. Die Probe wird dabei im Allgemeinen mit einem Ende am Ultraschallhorn befestigt, wobei das gegenüberliegende Ende frei ist. Dadurch entsteht eine Wechselbeanspruchung der Probe um die Mittellast Null. Wird die Probe auch am zweiten Ende befestigt, ist das Aufbringen einer konstanten oder variablen Vorlast möglich. Das zweite Probenende wird dafür z.B. an eine Universalprüfmaschine, oder an ein zweites Ultraschallhorn (Doppelschwinger-Verfahren) angekoppelt.

Im Resonanzbetrieb entspricht die Probenlänge der halben Wellenlänge ($\lambda/2$) der stehenden Ultraschallwelle im betreffenden Material. Um eine stehende Welle zu erzeugen, müssen die Proben entsprechend abgestimmt werden. Die Dehnung und Spannung sind bei Resonanz sinusförmig entlang der Probe (also in Längsrichtung) verteilt, und das Maximum von Dehnung und Spannung liegt in der Längsmitte der Probe. Dieses Maximum wird zur Berechnung der Ermüdungs- und bruchmechanischen Werte (wie Dauerfestigkeit oder Spannungsintensitätsfaktoren) herangezogen. Für die erwähnte Wechselbeanspruchung mit überlagerter konstanter oder variabler Zug-, Druck-, Torsions-Last erfolgt die Ankopplung an Stellen von geradzahligen Vielfachen der halben Wellenlänge ($\lambda/2$), sodass eine Resonanzbeanspruchung gewährleistet ist.

Für bestimmte Sonderfälle ist ein Betrieb auch mit nicht abgestimmten Proben möglich. Die Proben schwingen also nicht in Resonanz, sondern es entsteht eine durchlaufende Welle dadurch, dass die Probe kürzer als $\lambda/2$ ist und am zweiten Ende befestigt ist, sodass die Welle am festen Ende reflektiert wird. Die entstehenden Dehnungen und Spannungen sind nicht sinusförmig - mit den Maxima in Längsmitte - entlang der Probenlänge verteilt, sondern meist etwa linear. Da der Dehnungs-/Spannungsverlauf von der gewählten Probenlänge abhängt, müssen für jede Probenlänge eigene Eichmessungen durchgeführt werden.

Die Proben (sowohl Resonanz- als auch Nicht-Resonanz-Proben) können stabförmig mit rundem (kreisförmig oder elliptisch), rechteckigem oder quadratischem Querschnitt sein oder als hohle Zylinder ausgebildet sein. Es können auch Uhrglas- oder Hantelproben mit rundem oder eckigem Querschnitt eingesetzt werden (Stanzl S.E., Fatigue Testing at Ultrasonic Frequencies, Journal of the Society of Environmental Engineers, 25-1, 1986, 11-16). Zur Bestimmung bruchmechanischer Kennwerte (Spannungsintensitätsfaktoren etc.) werden gekerbte Proben (z.B. AT Patent Nr. 378 853) verwendet.

Bisher wurden Proben zur Prüfung mit dem Ultraschall-Ermüdungsverfahren durchgängig aus demselben Werkstoff (der auch ein Verbundwerkstoff, bestehend aus verschiedenen Materialien, sein kann) hergestellt. Es gibt keine Publikation, in welcher über die Prüfung von Proben, die an der Stelle des Maximums der Dehnungs- und Spannungsamplitude aus zwei oder mehreren Werkstoffen bestehen, mit der beschriebenen Ultraschalltechnik berichtet wird. Dies stellt einen Nachteil für das Ultraschall-Ermüdungsverfahren dar.

Es gibt in der Technik viele Verbindungen zwischen verschiedenen Werkstoffen (Metalle, verschiedene Legierungen mit unterschiedlicher thermischer und mechanischer Behandlung, Kunststoffe, Holz, Keramiken, Baustoffe usw.). Heute werden neue Verbindungen zwischen den verschiedenen Werkstoffen hergestellt (wie z.B. mit Laser- und Elektronenschweißtechnik, Löt- und Klebetechnik). Für die Industrie ist dies ein neuer Anreiz, der z.B. im Autobau, in der Flugzeug-, Medizin- und Tieftemperaturtechnik sowie Raumforschung vehement verfolgt wird. Bisher war eine Prüfung von Verbundproben (d.h. der Interfaces zwischen Materialien) mit der Ultraschalltechnik nicht möglich.

<u>Ziel der Erfindung</u> ist es, diesen Nachteil zu beseitigen, indem Form und Abmessungen der Ultraschallproben so angepasst werden, dass eine stehende mechanische Welle erzeugt wird, welche die Ermittlung der Ermüdungseigenschaften und der bruchmechanischen Werte der Interfaces verschiedener Werkstoffe ermöglicht. Elastizitätsmodul, bzw. Schubmodul und Form der Probe sollen somit die Entstehung einer stehenden Ultraschall-Welle zulassen, bzw. soll auch bei Nicht-Resonanzbeanspruchung unter Anwendung der oben erwähnten geeigneten Versuchsführung die Interface-Prüfung möglich sein.

Die Impedanzen der beiden Werkstoffe dürfen nicht zu unterschiedlich sein, d.h. das Verhältnis der Impedanzen soll nicht mehr als das Zehnfache betragen. Wäre das Verhältnis der Impedanzen größer, würde die entstehende Welle zum Teil am Interface reflektiert, und eine Messung der mechanischen und bruchmechanischen Werte wäre somit sind nicht mehr gültig.

Die üblichen (aus nur einem Werkstoff bestehenden) Proben bestehen aus einem Stück. Hingegen muss bei unterschiedlichen Werkstoffen die Länge, bedingt durch die unterschiedlichen Dichten und Elastizitätsmoduln, bzw. Schubmoduln verschieden sein, um eine stehende mechanische Welle zu erreichen. Im Wesentlichen müssen die Abmessungen der Proben entsprechend

$$ l_1/l_2 = \lambda_1/\lambda_2 \;\; \text{bzw.} \; l_1 = \lambda_1/4 \;\; l_2 = \lambda_1/4 $$

(für Resonanzbeanspruchung) mit jenen der Ultraschallwelle übereinstimmen.

Bei den Hantel- und Uhrglasproben müssen sowohl die Form, als auch die Länge angepasst werden.

Form und Länge werden mit Rechenprogrammen bestimmt, die für die verschiedenen Probenformen (stabartig, zylindrisch, Hantel-, Uhrglas-förmig) entwickelt wurden.

Der durch die Erfindung bewirkte Fortschritt besteht darin, dass das Ermüdungsverhalten (Wöhlerkurven, Dauerfestigkeit) und die bruchmechanischen Werte (Spannungsintensitätsfaktoren, Schwellwerte, Ermüdungsrissausbreitungs-Geschwindigkeiten) der Interfaces von zwei bzw. mehreren unterschiedlichen Werkstoffen bei einer zyklischen Beanspruchung bestimmt werden. Dies ist wichtig für die Autoindustrie (Karosserieteile), Flugtechnik und Raumforschung, für welche man als Fügetechnik z.B. die Lasertechnik einsetzen will.

Im Kesselbau wird die Explodiertechnik (die beiden Werkstoffe werden durch eine Sprengstoffexplosion verbunden) eingesetzt. Auch zur Prüfung von Schichten (Farb- und Schutzschichten gegen Korrosion), in der Fügetechnik und bei bestimmten Verfahren der Dünnschichtindustrie hat man Interesse an solchen Prüfungen. Die Proben werden mit Klebstoffen oder anderen Verfahren verbunden, wobei die Kenntnis der mechanischen und bruchmechanischen Werte von größter Bedeutung ist. Dabei können sogar mehrere Interfaces während der Prüfung getestet werden.

Dies trifft besonders für Interfaces zweier Werkstoffe zu, die in der Industrie zyklischen Belastungen ausgesetzt sind, besonders dann, wenn die Werkstücke eine große Lebensdauer haben sollen.

Die erfindungsgemäßen Prüfkörper können verschiedene Längen und Formen haben. Sie können ein freies Ende haben (Mittelspannung Null) oder werden an beiden Enden an die Ultraschallapparatur (mittels Schraubverbindung, Lötung, Schweißung, Klemmung) für von Null verschiedene Mittelspannungen angekoppelt, wobei die Spannungsamplituden konstant oder variabel sein können. Sie können zur Erfassung der Rissinitiierung (Ermüdungsdaten), der Lebensdauer und des Ermüdungsrisswachstums problemlos eingesetzt werden. Sie sind auch für mehrachsige Belastung (Zug, Druck, Scherung oder Torsion) geeignet und können bis zu niedrigsten und höchsten Temperaturen verwendet werden.

Um Transversalschwingungen im Ultraschallbetrieb zu vermeiden, müssen die Proben hinreichend steif sein, was durch geeignete Probendicken oder -formen erreicht wird.

Die Erfindung wird im Folgenden an Hand von dargestellten Ausführungsbeispielen erläutert. Es zeigen die Figur 1 das Spannungs- und Dehnungsverhalten der Prüfkörper mit Interfaces von unterschiedlichen Werkstoffen. In den Figuren 2 bis 4 werden nicht gekerbte und gekerbte Probekörper mit Interfaces aus unterschiedlichen Werkstoffen dargestellt. In Figur 5 werden nicht kerbte und gekerbte Hantel- und Uhrglasproben mit Interfaces von unterschiedlichen Werkstoffen dargestellt.

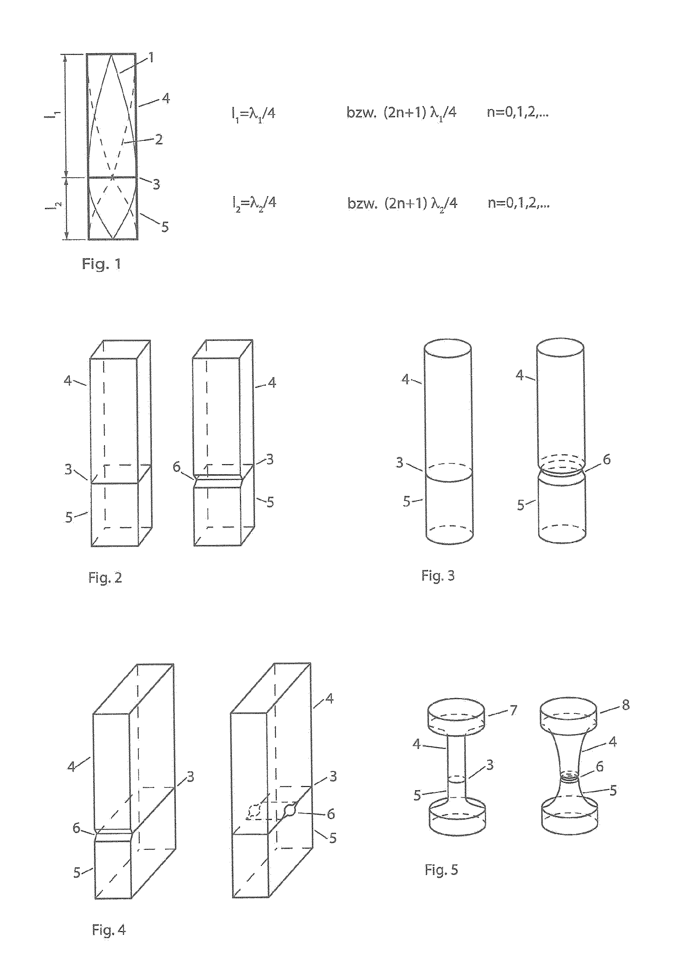

In Figur 1 werden die Spannungs- (1)- und Dehnungsverläufe (2) einer glatten Probe mit einem Interface (3) zwischen zwei Werkstoffen dargestellt. Wobei die ganze Länge des Prüfkörpers aus zwei Teilen besteht $l_1 = \lambda_1/4$ $l_2 = \lambda_2/4$ bzw. $(2n+1) \lambda_{1 oder 2}/4$, mit $l_1$ und $l_2$.

In Figur 2 werden glatte (a) und gekerbte (b) stabförmige Prüfkörper mit quadratischem Querschnitt aus zwei Werkstoffen (4,5) mit Interfaces (3) und mit Kerben (6) dargestellt.

In Figur 3 werden zylindrische glatte (a) und gekerbte (b) Prüfkörper aus zwei Werkstoffen (4,5) mit Interfaces (3) und mit Kerben (6) dargestellt.

In Figur 4 werden gekerbte stabförmige Prüfkörper mit rechteckigem Querschnitt aus zwei Werkstoffen (4,5) mit Interfaces (3) und mit Kerben (6) dargestellt.

In Figur 5 werden Hantel- und Uhrglasprüfkörper aus zwei Werkstoffen (4,5) mit Interfaces (3) mit (6) und ohne Kerben dargestellt.

**Patentansprüche**

1. Prüfkörper zur Ermittlung von Materialkennwerten mittels Ultraschalbeanspruchung, welcher im Wesentlichen stabförmig ausgeführt und zumindest mit einem seiner beiden Enden an ein Ultraschallhorn ankoppelbar ist, **dadurch gekennzeichnet, dass** er aus zwei mittels einer Grenzschicht miteinander verbundenen Stababschnitten unterschiedlichen Materials besteht, deren Längenverhältnis im Wesentlichen dem Verhältnis der Wellenlängen der Ultraschallausbreitung in den jeweiligen Materialien entspricht.

2. Prüfkörper nach Anspruch 1, **dadurch gekennzeichnet, dass** die Länge ($l_1$; $l_2$) jedes Stababschnittes im Wesentlichen einem ungeradzahligen Vielfachen des Viertels der Wellenlänge ($\lambda_1$; $\lambda_2$) der Ultraschallausbreitung in diesem Stababschnitt entspricht.

3. Prüfkörper nach Anspruch 1, dessen Längen ($l_1$; $l_2$) bei Nicht-Resonanzbeanspruchung für verschiedene Materialkombinationen in einer jeweils geeigneten Versuchsführung gesondert ermittelt werden.

$l_1 = \lambda_1/4$      bzw. $(2n+1)\,\lambda_1/4$      $n = 0,1,2,\ldots$

$l_2 = \lambda_2/4$      bzw. $(2n+1)\,\lambda_2/4$      $n = 0,1,2,\ldots$

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

*   AT 378853

**In der Beschreibung aufgeführte Nicht-Patentliteratur**

*   **STANZL S.E.** Fatigue Testing at Ultrasonic Frequencies. *Journal of the Society of Environmental Engineers,* 1986, vol. 25-1, 11-16